# EUROPÄISCHE PATENTSCHRIFT

(11) **EP 0 372 341 B1**
(45) Veröffentlichungstag und Bekanntmachung des Hinweises auf die Patenterteilung: **28.09.1994**
(21) Anmeldenummer: 89121827.3
(22) Anmeldetag: 25.11.1989
(51) Int. Cl.: C07F 7/16

(54) **Verfahren zur Herstellung von Organochlorsilanen**
Method for the preparation of chloro-organosilanes
Procédé de préparation d'organochlorosilanes

(30) Priorität: 08.12.1988 DE 3841417
(43) Veröffentlichungstag der Anmeldung: 13.06.1990
(73) Patentinhaber: BAYER AG, 51368 Leverkusen (DE)
(72) Erfinder: Feldner, Kurt, Dr., D-5090 Leverkusen (DE); Degen, Bruno, Dr., D-5203 Much (DE); Wagner, Gebhard, Dr., D-5068 Odenthal (DE); Schulze, Manfred, Dr., D-5653 Leichlingen (DE)

(56) Entgegenhaltungen:
- FR-A- 1 577 612
- GB-A- 2 127 032
- US-A- 4 281 149
- JOURNAL OF METALS, Band 30, Nr. 6, Juni 1978, Seiten 8-13, New York, US; V.D.DOSAJ et al.: "High-purity silicon for solar cell applications"
- CHEMICAL ABSTRACTS, Band 88, 1978, Seite 121, Zusammenfassung Nr. 193259q,Columbus, Ohio, US; J. NOVOSAD et al.: "Fluidization of powders by a horizontalrotating jet", & CHEM.-ING.-TECH. 1977, 49(11),915

## Beschreibung

Die vorliegende Erfindung betrifft ein neues Verfahren zur Herstellung von Organochlorsilanen durch Umsetzung von mit Inertgas verdüstem Silicium mit einem Alkyl- bzw. Arylchlorid in Gegenwart eines Kupferkatalysators und Promotorsubstanzen. Insbesondere betrifft die Erfindung ein Verfahren zur Herstellung von Methylchlorsilanen.

Das grundlegende Verfahren zum Herstellen von Methylchlorsilanen ist die direkte Umsetzung von feinteiligem gemahlenem Silicium mit Methylchlorid in Gegenwart von metallischem Kupfer oder seltener Silber als Katalysator. Die Umsetzung ist dem Fachmann als "Rochow-Synthese" bekannt und in der US-PS 2 380 995 beschrieben.

Nach diesem Verfahren erhält man vorwiegend eine Mischung von folgenden Silanen (Me = CH₃): Me₂SiCl₂, Me₄Si, Me₃SiCl, MeSiCl₃, SiCl₄, HSiCl₃, MeHSiCl₂ und Me₂HSiCl. Neben den genannten monomeren Methylchlorsilanen entstehen in geringeren Mengen auch noch höhersiedende Verbindungen wie z.B. Methylchlordisilane, Methylchlortrisilane, Disiloxane und Silmethylene.

Technische Verwendung finden meist die monomeren Verbindungen und davon insbesondere das Dimethyldichlorsilan. Dieses bevorzugte Reaktionsprodukt wird daher mit möglichst hoher Selektivität angestrebt: Ein Maß hierfür ist u.a. das Verhältnis von MeSiCl₃/Me₂SiCl₂ (das sog. Tri-/Di-Verhältnis), dessen Wert möglichst klein sein sollte.

Großtechnisch besonders interessant ist die Herstellung von Methylchlorsilanen durch Reaktion von Methylchlorid mit Silicium in einem Fließbettreaktor, wobei im Überschuß eingesetztes Methylchlorid sowohl Reaktionspartner als auch Fluidisierungsmedium ist.

Seit den grundlegenden Untersuchungen vor ca. 40 Jahren hat es bis heute eine Vielzahl von Veröffentlichungen gegeben, in denen Verfahren zur Durchführung der Reaktion, zur Verbesserung der Selektivität, zur Herstellung von geeigneten Kontaktmassen und Katalysator/Promotorsystemen beschrieben sind. Einen ersten zusammenfassenden Überblick findet man z.B. in "Organohalosilanes: Precursors to silicones", Voorhoeve, Elsevier Publishing Company Amsterdam, New York, Londen, 1967.

Jüngste Arbeiten konzentrierten sich hauptsächlich auf den gezielten Einsatz von Spurenelementen, sog. Promotoren im Katalysatorsystem.

Beispielhaft seien hier genannt: DE-A-3 425 424, EP-A-138 678, EP-A-138 679, DE-A-3 501 085, EP-A-191 502, EP-A-194 214, EP-A-195 728, EP-A-223 447.

Vergleichsweise wenige Veröffentlichungen beziehen sich auf das Silicium und wenn, dann sind Reinheitsanforderungen bzw. physikalische Kenngrößen wie die Korngrößenverteilung Gegenstand der Arbeiten. Zum Beispiel beschreibt die US-Patentschrift Nr. 3 133 109, daß Teilchengrößen von 20 bis 200 »m für einen optimalen Betrieb eines Fließbettreaktors geeignet sind, In US-PS Nr. 4 500 724 wird Silicium kleiner 700 »m als geeignet angesehen, wobei die mittlere Korngröße 20 bis 300 »m und bevorzugt 100 bis 150 »m betragen soll. Die obengenannten Grenzen gelten allgemein als Stand der Technik und Fachleute wissen, daß das jeweilige Optimum in engem Zusammenhang mit dem jeweils benutzten Reaktorsystem zu sehen ist.

Die vorliegende Erfindung beinhaltet nun ein Verfahren zur Herstellung von Organochlorsilanen, welches dadurch gekennzeichnet ist, daß man Silicium, das durch Verdüsen mit Inertgas oder eine geeignete Legierung von Silicium, die durch Verdüsen mit Inertgas hergestellt worden ist, verwendet und so in eine für die Herstellung von Organochlorsilanen direkt einsetzbare feinteilige Form gebracht worden ist.

Das mit Inertgas verdüste Silicium weist eine Teilchengröße von 0,1 - 1000 »m, eine spezifische Oberfläche von 0,001 bis 1 m²/g (nach BET) und eine chemische Zusammensetzung von (in Gew.-%) 0,05 - 1 % Fe; 0,01 - 1 % Al; 0,0001 - 1 % Ca; 0 - 8 % Cu; 0 - 1 % Zn; 0 - 1 % Sn; 0 - 0,5 % B; 0 - 0,5 % P; 0 - 0,5 % Na; 0 - 0,5 % Li; 0 - 0,5 % K; 0 - 0,5 % Mg; 0 - 0:5 % Sr; 0 - 0,5 Ba; 0 - 0,5 % Be und der Rest Silicium (bzw. gegebenenfalls weitere Verunreinigungen in kleinen Mengen).

Bevorzugt weist das Silicium Gehalte von 0,05 - 0,38 % Al; 0,02 - 0,20 % Ca und 0,25 - 0,55 % Fe auf.

Das Verdüsen von Metallen (im englischen Sprachraum: atomizing) ist ein an sich gängiges Verfahren zur Herstellung von Metallpulvern und findet z. B. bei Metallen wie Kupfer oder dessen Legierungen seit langem Anwendung.

Meist werden so hergestellte Metallpulver nach den in der Pulvermetallurgie üblichen Arbeitstechniken zu Formteilen mit besonderen Eigenschaften weiter verarbeitet; vergl. dazu: Ullmanns Encycklopädie der technischen Chemie, 4. Auflage, Band 19, spez. S. 566, Verlag Chemie, Weinheim, 1980.

Entscheidend bei der Verdüsungstechnik ist, daß dabei extrem kurze Erstarrungs- und Abkühlzeiten für das Silicium realisiert werden Weiterhin von entscheidender Bedeutung ist, daß das Si-Pulver mit Inertgas, z.B. Stickstoff, verdüst wird.

Vollkommen überraschend und neu ist die Tatsache, daß so hergestelltes Ausgangsmaterial bei der Organochlorsilansynthese wesentlich höhere Reaktionsgeschwindigkeiten zeigt.

Das erfindungsgemäße Verfahren wird im Falle der Methylchlorsilansynthese in der Weise durchgeführt, daß man verdüstes Silicium mit einer Reinheit von bevorzugt mehr als 98,5 % und einer Korngröße kleiner 1000», bevorzugt kleiner 500 »m mit Methylchlorid umsetzt, und zwar in Gegenwart einer mechanisch hergestellten Mischung aus Kupfer-Katalysator und Promotorsubstanzen. Bevorzugt kommt das erfindungsgemäße Verfahren in einem Fließbettreaktor zur Anwendung, da hier die weitaus günstigsten Ausbeuten an gewünschtem Produkt erhalten werden und dabei auch verfahrenstechnische Vorteile, z.B. hoher Wärmeübergang, genutzt werden können.

Eine weitere bevorzugte Ausführungsform des Verfahrens ist die Umsetzung einer Silicium/Kupferlegierung, die ebenfalls durch Verdüsung unter Inertgas gewonnen wurde, mit Methylchlorid.

Sog. Promotorelemente, sofern sie in metallischer Form zum Einsatz kommen, können selbstverständlich auch schon der zu verdüsenden Legierung zugesetzt werden oder aber auch der verdüsten Silicium/Kupferlegierung mechanisch zugemischt werden.

Auch im letztgenannten Fall kommt bei der Durchführung der Reaktion bevorzugtermaßen ein Fließbettreaktor zum Einsatz.

Das bei dem erfindungsgemäßen Verfahren eingesetzte Silicium besitzt eine Rienheit von mehr als 98,5 % Si, bevorzugt mehr als 99 % Si. Besonderer Wert wird darauf gelegt, daß der Pb-Gehalt des Siliciums 10 ppm nicht überschreitet Da die bevorzugte verfahrenstechnische Ausführung der vorliegenden Erfindung die Umsetzung im Fließbettreaktor ist, kommt neben den chemischen Eigenschaften des Siliciums auch den physikalischen Eigenschaften - wie z.B. der Teilchengrößenverteilung - eine erhebliche Bedeutung zu. Die Siliciumteilchen sollten in der Regel kleiner als 1000 », bevorzugt kleiner als 500 »m sein, besonders bevorzugt wird eine Kornverteilung zwischen 30 und 300 »m bei einer mittleren Korngröße von 100 bis 150 »m.

Die oben angegebenen Grenzen für die bevorzugte Teilchengrößenverteilung sind auch für eine geeignete verdüste Silicium/Kupfer-Legierung gültig.

Bei der bevorzugten Ausführungsform des erfindungsgemäßen Verfahrens zur Herstellung von Methylchlorsilanen werden 0,5 bis 8 Teile Katalysator/Promotor-Mischung auf 100 Teile Siliciummetall und vorzugsweise 1 bis 3 Teile der Mischung auf 100 Teile Silicium eingesetzt. Dieser Bereich kann jedoch in weitem Rahmen variieren, da die Umsetzung üblicherweise nicht diskontinuierlich, sondern kontinuierlich in einem Fließbett-Reaktor ausgeführt wird

Kommt erfindungsgemäß eine verdüste Legierung zum Einsatz, so ist hier die Zusammensetzung folgendermaßen gewählt:

| | |
|---|---|
| Si: | 90 bis 99 Gew.-% |
| Cu: | 0,5 bis 8 Gew.-% |

Selbstverständlich kann sowohl eine verdüste Legierung als auch verdüstes Silicium selbst die dem Fachmann bekannten typischen Verunreinigungen wie Fe, Al, Ca, Ti usw. in den oben angegebenen Grenzen enthalten.

Erfindungsgemäß kann man der noch zu verdüsenden Schmelze geeignete Promotorelemente zusetzen. Promotorelemente sind dem Fachmann bekannt und es sei hier auf die eingangs zitierte Literatur verwiesen. Insbesondere werden dort die Elemente Zink, Zinn und Phosphor genannt.

Das erfindungsgemäße Verfahren wird bei einer Temperatur im Bereich von 250 bis 350°C, bevorzugtermaßen aber zwischen 280 und 330°C durchgeführt.

Es ist empfehlenswert, das Verfahren unter gegenüber Atmosphärendruck erhöhtem Druck auszuführen, da dadurch die Raum/Zeit-Ausbeute gesteigert wird.

Ratsam ist ein Überdruck bis 10 bar, am sinnvollsten bis 5 bar.

Unter diesen Bedingungen ist die Selektivität hinsichtlich der Bildung von Dimethyldichlorsilan optimal. Darüber hinaus ist so eine verfahrenstechnisch optimal beherrschbare Reaktionsgeschwindigkeit erzielbar.

Das gasförmige Methylchlorid wird bei der Umsetzung in großem Überschuß benutzt, da es kontinuierlich durch die Kontaktmasse aus Siliciummetallkörnern und der Katalysator/Promotor-Mischung bzw durch die verdüste Legierung hindurchgeführt wird und diese fluidisiert.

Der Fachmann weiß, daß man insbesondere im Laboratoriumsmaßstab nicht unbedingt mit Fließbettreaktoren arbeiten muß, vielmehr kommen hier häufig Reaktoren zum Einsatz, bei denen die Kontaktmasse während der Umsetzung in Vibrationen versetzt bzw. mit einem Spiralrührer in Bewegung gehalten wird, um lokale Überhitzungen zu vermeiden und eine sichere Reaktionsführung zu gewährleisten.

Wie die zahlreichen, oben zitierten Veröffentlichungen zeigen, versuchte man bislang neben der Selektivität auch die Ausbeute an Dimethyldichlorsilan über das Katalysator/Promotorsystem zu verbessern. Man fand allerdings, daß auch die Reaktionsgeschwindigkeit sehr sensibel auf Promotoren und Inhibitoren reagiert. So ist in der DE-OS 3 425 424 auf S. 10 die beträchtliche Erhöhung der Bildungsgeschwindigkeit von Dimethyldichlorsilan mit zum Gegenstand der Erfindung gemacht worden.

Um so überraschender war die Tatsache, daß auch die Zerkleinerungsart des Siliciums - Verdüsen gegenüber Vermahlen - eine so entscheidende Rolle spielt. Dieser Effekt ist überraschend und neu.

Das erfindungsgemäße Verfahren kann natürlich auch zur Herstellung von anderen Organochlorsilanen eingesetzt werden. Eventuell notwendig werdende Veränderungen der Verfahrensparameter sind dem Fachmann geläufig.

Im folgenden wird die Erfindung anhand von Beispielen näher erklärt:

### Beispiel 1

In einem Rührbettreaktor aus Glas, innerer Durchmesser = 30 mm, der mit einem Spiralrührer ausgestattet ist, wurden alle folgenden Experimente durchgeführt. Dabei wurde immer die gleiche Menge Silicium bzw Silicium/Kupferlegierung der gleichen Kornverteilung von 71 bis 160 »m eingesetzt. Methylchlorid wurde unter einem Druck von 2 bar von unten über eine Glasfritte durch die Kontaktmasse geleitet. Die Methylchloridmenge wurde konstant gehalten und betrug in allen Fällen ca. 1,5 l/h bei 2 bar. Nach dem Aufheizen und Anspringen der Reaktion wurde eine stationäre Versuchsphase bei 300°C eingestellt und unter so festgelegten Bedingungen die Menge pro Zeiteinheit an gebildeter Rohsilanmischung bestimmt. Die angegebenen Werte sind immer Mittelwert aus vier Einzelbestimmungen unter konstant gehaltenen Randbedingungen von: 2 bar, 1,5 l/h Methylchlorid und 300°C.

Die Kontaktmasse bestand aus jeweils 40 g Silicium, 3,2 g Kupferkatalysator und 0,05 g ZnO und wurde vor dem Einsatz homogenisiert. In allen Fällen wurde der gleiche Katalysator verwendet Probe A und B sind auf üblichem Wege durch Mahlen hergestellte handelsübliche Siliciumpulver unterschiedlicher Provenienz. Probe C ist ein durch Verdüsen mit Stickstoff hergestelltes Siliciumpulver.

Unter vergleichbaren Reaktionsbedingungen (2 bar, 1,5 l/h MeCl und 300°C) findet man folgende Produktionsraten angegeben in g/h Rohsilanmischung:

| | | |
|---|---|---|
| A: 5,7 g/h | B: 5,2 g/h | C: 8,3 g/h (über einen Zeitraum von ca. 8 Stunden), |

das entspricht einer Steigerung der Produktionsrate von ca. 45 bzw. 56 % durch Verwendung von verdüstem Material.

### Beispiel 2

In dem in Beispiel 1 beschriebenen Reaktor wurde unter den gleichen Bedingungen (2 bar, 1,5 l/h Methylchlorid, 300°C) eine durch Verdüsen hergestellte Legierung folgender Zusammensetzung zur Reaktion gebracht:

| | | | |
|---|---|---|---|
| Fe: 0,34; | Al: 0,40; | Cu: 5,75; | Zn: 0,14 |
| (plus weitere nicht analysierte Verunreinigungen) | | | |

Die gefundene Produktionsrate lag in zwei durchgeführten Experimenten mit 8,13 g/h und 9,4 g/h ebenfalls deutlich über sonst üblichen Produktionsraten von 5 bis 6 g/h.

### Beispiel 3

Beispiel 3 soll zeigen, daß das rasche Abkühlen von entscheidender Bedeutung für die Produktionsrate ist.

Unter den o.g. Reaktionsbedingungen wird die in Beispiel 1 unter C benannte Probe verglichen mit einer Probe D des gleichen verdüsten Materials, welche allerdings vor dem Einsatz in der Direktsynthese einer Temperbehandlung unterzogen wurde. Die Probe wurde dazu, in einer Ampulle im Vakuum abgeschmolzen, 2 h bei 1000°C getempert und dann langsam im Verlauf von weiteren 6 bis 8 h wieder abgekühlt.

Bei den o.g. Reaktionsbedingungen für die Umsetzung mit Methylchlorid findet man (vgl. Beispiel 1) folgende Produktionsraten:

| | |
|---|---|
| Probe C (ungetempert): | 8,3 g/h |
| Probe D (getempert): | 2,35 g/h |

Die Zusammensetzung der Kontaktmasse wurde selbstverständlich gleich gewählt.

Das Beispiel zeigt einen Rückgang der Produktionsrate für Rohsilane auf ca. 28 % gegenüber der ursprünglichen Probe C, welches ausschließlich auf die Wärmebehandlung zurückzuführen ist.

## Patentansprüche

1. Verfahren zur Herstellung von Organochlorsilanen durch Umsetzung von Silicium und/oder Siliciumlegierungen mit Alkyl- und/oder Arylchloriden in Gegenwart eines Kupferkatalysators und gegebenenfalls Promotorsubstanzen, dadurch gekennzeichnet, daß ein mit Inertgas verdüstes Silicium mit einer Korngröße von weniger als 1000 »m und einem Gehalt (in Gew.-%) von 0,05 - 1 % Fe; 0,01 - 1 % Al; 0,0001 - 1 % Ca; 0 - 8 % Cu; 0 - 1 % Zn; 0 - 1 % Sn; 0 - 0,5 % B; 0 - 0,5 % P; 0 - 0,5 % Na; 0 - 0,5 % Li; 0 - 0,5 % K; 0 - 0,5 % Mg; 0 - 0,5 % Sr; 0 - 0,5 % Ba; 0 - 0,5 % Be eingesetzt wird.

2. Verfahren nach Anspruch 1, dadurch gekennzeichnet, daß man eine mit Inertgas verdüste Si/Cu-Legierung einsetzt.

3. Verfahren nach Anspruch 1 oder 2, dadurch gekennzeichnet, daß das verdüste Silicium bzw. die verdüste Si-Legierung bereits Promotorelemente enthält.

4. Verfahren nach einem der Ansprüche 1 bis 3, dadurch gekennzeichnet, daß man ein mit Stickstoff verdüstes Si bzw. Si-Legierung einsetzt.

## Claims

1. A process for the production of organochlorosilanes by reaction of silicon and/or silicon alloys with alkyl and/or aryl chlorides in the presence of a copper catalyst and, optionally, promoter elements, characterized in that a silicon atomized with an inert gas and having a particle size of less than 1000 »m and a content (in % by weight) of 0.05 - 1% Fe; 0.01 - 1% Al; 0.0001 - 1% Ca; 0 - 8% Cu; 0 - 1% Zn; 0 - 1% Sn; 0 - 0.5% B; 0 - 0.5% P; 0 - 0.5% Na; 0 - 0.5% Li; 0 - 0.5% K; 0 - 0.5% Mg; 0 - 0.5% Sr; 0 - 0.5% Ba; 0 - 0.5% Be is used.

2. A process as claimed in claim 1, characterized in that an Si/Cu alloy atomized with an inert gas is used.

3. A process as claimed in claim 1 or 2, characterized in that the atomized silicon or the atomized Si alloy already contains promoter elements.

4. A process as claimed in any of claims 1 to 3, characterized in that an Si or Si alloy atomized with nitrogen is used.

## Revendications

1. Procédé pour préparer des organochlorosilanes par réaction du silicium et/ou d'alliages de silicium avec des chlorures d'alkyle et/ou d'aryle en présence d'un catalyseur au cuivre et le cas échéant de substances activatrices, caractérisé en ce que l'on met en oeuvre un silicium atomisé avec un gaz inerte à une dimension de grain inférieure à 1 000 »m et une teneur (en % en poids) de 0,05 à 1 % de Fe; 0,01 à 1 % d'Al; 0,0001 à 1 % de Ca; 0 à 8 % de Cu ; 0 à 1 % de Zn ; 0 à 1 % de Sn ; 0 à 0,5 % de B ; 0 à 0,5 % de P ; 0 à 0,5 % de Na ; 0 à 0,5 % de Li ; 0 à 0,5 % de K ; 0 à 0,5 % de Mg ; 0 à 0,5 % de Sr ; 0 à 0,5 % de Ba ; 0 à 0,5 % de Be.

2. Procédé selon la revendication 1, caractérisé en ce que l'on met en oeuvre un alliage Si/Cu atomisé avec un gaz inerte.

3. Procédé selon la revendication 1 ou 2, caractérisé en ce que le silicium atomisé ou l'alliage de silicium atomisé contient déjà des éléments activateurs.

4. Procédé selon l'une des revendications 1 à 3, caractérisé en ce que l'on met en oeuvre du silicium ou un alliage de silicium atomisé avec de l'azote.
